# EUROPEAN PATENT APPLICATION

(11) **EP 3 050 783 A1**
(43) Date of publication of application: **03.08.2016**
(21) Application number: 16000230.9
(22) Date of filing: 01.02.2016
(51) Int. Cl.: B62H 3/04, B25H 1/00

(54) **STAND FOR SUPPORTING BICYCLES OR SIMILAR VEHICLES**

(30) Priority: 30.01.2015 IT VI20150030
(71) Applicant: Tamassia, Sandro, 35030 Saccolongo (PD) (IT)
(72) Inventor: Tamassia, Sandro, 35030 Saccolongo (PD) (IT)
(74) Representative: Maiello, Helenio Francesco

(57) **Abstract**

A stand for supporting bicycles or similar vehicles comprises a pair of substantially vertical lateral supports (2, 3) mutually facing and transversely offset to laterally delimit a seat (4) for housing a wheel of a bicycle or similar vehicle and means (7) for the mutual connection of the lateral supports (2, 3) in a moved away first operating position adapted to allow the insertion of the wheel in the seat (4). The connection means (7) are adapted to allow the automatic transverse movement of the supports (2, 3) upon insertion of the wheel in the seat (4) due to the thrust exerted by the wheel on the supports (2, 3) to bring the same from the first operative position to a second position narrower than the first position.

## Description

### Technical Field

The present invention relates to the technical field of accessories for vehicles with two or more wheels and in particular it has for object a stand for supporting bicycles and similar vehicles.

### State of the art

In the field of cycling, both in the private use and within repair workshops, it is known the use of special supporting stands for bicycle adapted to stably keep the vehicle in a straight position in order to facilitate maintenance operations or simply to support the bicycle in the absence of other supports, such as the common kick-stands mounted directly to the frame.

A first type of stand comprises a frame provided with one or more arms for anchoring of the bicycle frame or of the wheel hub, so as to support the vehicle in a position raised from the ground.

These solutions, while allowing to operate in an easy manner on each part of the vehicle, are cumbersome and difficult to use, other than particularly expensive.

A simpler solution provides a stand substantially defined by a metal stall with a frame provided with a seat for housing a part of a bicycle wheel so as to support the entire vehicle.

However, this kind of stands is not suitable to be used with any type of bicycle, but only with vehicles having a well-defined measure of the wheel.

Therefore, if a stand with a seat too large compared to the thickness of the wheel is used, the bike would not be stable.

By contrast, a seat too narrow compared to the thickness of the wheel would also not allow the insertion thereof or, if the wheel is able to enter, it may remain blocked with the risk of damage when it is extracted.

Consequently, in order to operate correctly and to intervene on all types of bicycle, a repair shop would be forced to stock up with a plurality of different measurement stands.

### Scope of the invention

The object of the present invention is to overcome the above drawbacks of the prior art, by providing a stand for supporting bicycles or similar vehicles which is particularly efficient and easy to use.

A particular object is to provide a stand for supporting bicycles or similar vehicles that can be used with any type of wheels regardless of the specific measures.

Still another object is to provide a stand for supporting bicycles or similar vehicles which is of simple construction and is relatively cheap.

Not least object is to provide a stand for supporting bicycles or similar vehicles that has low encumbrance and is particularly lightweight to be easily transported.

These objects, as well as others which will become more apparent hereinafter, are achieved by a stand for supporting bicycles or similar vehicles that, according to claim 1, comprises a pair of substantially vertical side supports mutually facing and transversely staggered to laterally delimit a seat for positioning a wheel of a bicycle or similar vehicle, means for the mutual connection of said side supports in a first operating position adapted to allow the insertion of the wheel in said seat. According to a peculiar feature of the invention said connection means are suitable to allow the automatic transverse movement of said supports upon insertion of the wheel in said seat by the thrust exerted by the wheel on said supports to bring the same from said first operating position to a closest second position with respect to said first position.

Thanks to this combination of features, the housing seat of the wheel may automatically adapt to the specific measure of the wheel contextually to the insertion thereof, allowing the use of the stand with a multiplicity of wheels different both in thickness and in radius.

Advantageously, the connection means may comprise elastic return means adapted to automatically bring said supports from said second position to said first position.

In this way the removal of the wheel will be also facilitated because once the wheel will be lifted and will not act on the supports, the same automatically move away in order to facilitate the extraction of the wheel.

Advantageous embodiments of the stand are obtained according to the dependent claims.

### Brief disclosure of the drawings

Further features and advantages of the invention will become more apparent in light of the detailed description of a preferred but not exclusive embodiment of the stand, shown in way of non-limiting example with the aid of the attached drawing tables, wherein:
**FIG. 1** is a perspective view of the stand in the first operating position;

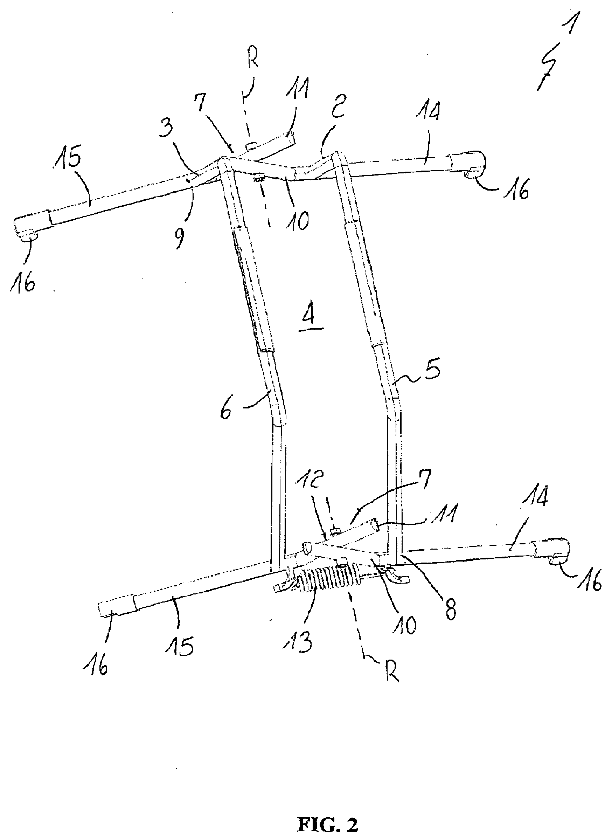

**FIG. 2** is a top view of the stand of Fig. 1;
**FIG. 3** is a front view of the stand of Fig. 1;
**FIG. 4** is a perspective view of the stand in the second operative position.

### Best mode of carrying out the invention

The appended figures show a stand, generally indicated by **1,** designed to be used in the private sector or in repair shops for repair and maintenance of bicycles and similar vehicles to support the bicycle in a stable straight position, corresponding to the driving position, during maintenance or simply as a support.

The stand **1** may also be equally used only as a parking stall as it is easily transportable and of limited overall dimensions.

The stand **1** essentially comprises a pair of substantially vertical side supports **2, 3** mutually facing and transversely staggered to laterally delimit a seat **4** for positioning a wheel of a bicycle or similar vehicle, not shown.

In the illustrated embodiment the supports **2, 3** are formed by thread-like elements that may be tubular or solid, for example made from rod of iron, aluminium or other metallic material or, still, in plastic material.

However, according to a not shown alternative embodiment, the supports may be mutually opposite and facing plates.

The housing seat **4** will be open on three sides, i.e. at the upper edges **5, 6** of the side supports **2, 3** and at the substantially vertical side margins thereof.

The supports **2, 3** are mutually joined by mutual connection means 7 adapted to keep them in a first operating position adapted to allow the insertion of the wheel inside of the housing seat **4.**

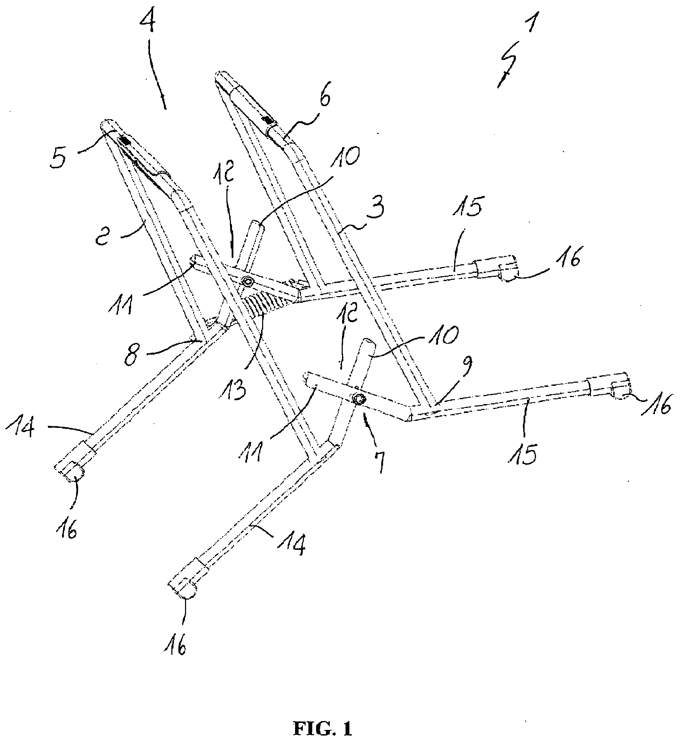

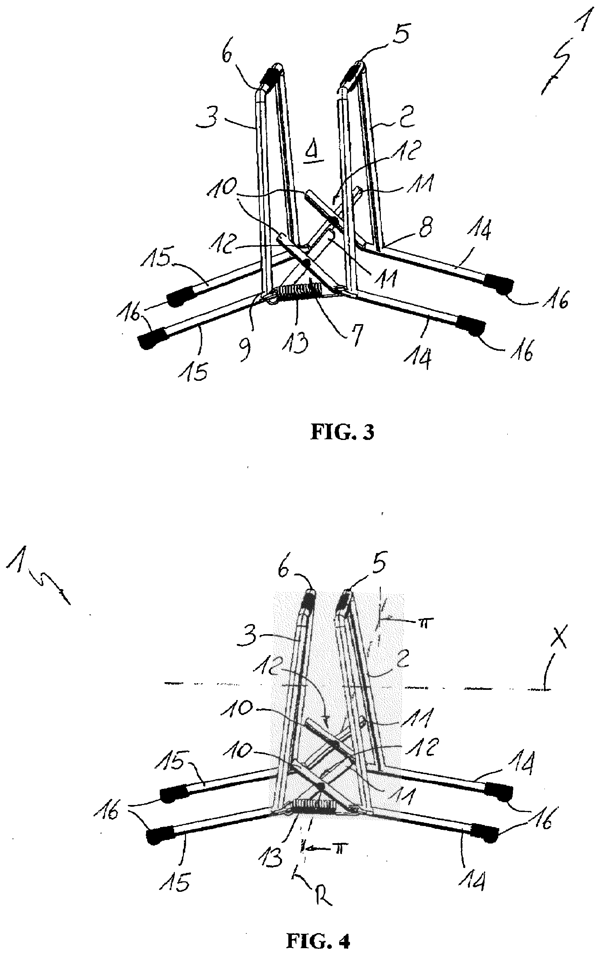

In particular, the connection means **7 are** adapted to allow the automatic mutual movement of the supports **2, 3** with respect to a transverse direction X upon insertion of the wheel in the housing seat **4** by effect of the thrust exerted by the wheel **2** on the supports **2, 3,** so as to bring the same from the first operating position of **Fig. 1** to a second position narrower than the first position, shown in **Fig. 4****.**

In particular, upon the action of the wheel on the supports **2, 3** the latter will approach each other until entering into contact with the same wheel so as to tighten it and to allow stable placement.

From **Fig. 3** it is also noted that the supports **2, 3** are substantially identical and arranged symmetrically with respect to a vertical median plane **π** perpendicular to the transverse direction X of reciprocal movement of the supports **2, 3.**

In a particular variant, not illustrated, one of the first arms **10, 11** may be longer than the other so as to limit the rotation of the supports during transport.

The upper edges **5, 6** of the supports **2, 3** are transversely staggered with adjustable transverse distance to allow insertion of the wheel in the seat **4** while the respective lower edges **8, 9** are mutually coupled by the connection means 7.

These last, in the embodiment of the figures, comprise each a pair of first transverse arms **10, 11** which extend from the respective lower edge **8, 9.**

Each of these first transverse arms **10** of one of the supports **2** intersects with a corresponding first transverse arm **11** of the other support 3 so as to define two pairs of first arms **10, 11** mutually hinged around an axis of mutual rotation R parallel to the median plane of symmetry **π**.

Thus, the supports **2,** 3 can rotate around this axis of rotation **R** between the first operative position in which the upper edges **5, 6** are at a maximum transverse distance and the second operating position in which the upper edges **5, 6** are at a minimum transverse distance.

In particular, each of the first transverse arms **10** of a support 2 is pivoted on a respective first transverse arm **11** of the other support **3** to rotate around the axis of rotation **R.**

Moreover, the mutually pivoted first arms **10, 11** of each pair are mutually crossed to define a bearing **12** for the wheel inside of the housing seat **4.**

The connection means 7 also comprise elastic return means **13** adapted to automatically return the supports **2, 3** from the second position to the first position following the removal of the wheel from the bearing.

In the illustrated embodiment, the elastic return means **13** are defined by a preloaded elastic element having opposite ends associated to respective side supports **2, 3.**

In particular, the elastic element **13** is a coil spring having opposite end fastened to corresponding mutually pivoted first arms **10, 11** one of said pairs in order to promote the reciprocal rotation.

Each support **2, 3 is** also provided with pairs of second transverse arms **14, 15** which extend from the respective lower edge **8, 9** in the opposite direction with respect to the corresponding first arms **10, 11** for resting on the floor or other supporting surface.

In the shown embodiment the second transverse arms **14, 15** have free ends fitted with clutching rubber feet **16** adapted to increase the stability of the stand **1** and to prevent it slipping on the floor.

In a not shown variant, wheels can be positioned in place of the rubber feet to facilitate the transport of the stand **1.**

Operatively, after having positioned the stand **1.** on a support surface, such as the floor, with the supports **2, 3** in the first operating position, it will be possible to insert the wheel therebetween and inside of the housing seat **4.**

When the wheel comes into contact with the first arms **10, 11** it applies a downward thrust to the supports **2, 3** causing the mutual rotation of the first arms **10, 11** around the rotation axis **R** and the consequent rotation of the supports **2, 3** for the mutual approaching of their upper edges **5, 6** as long as the same does not come into contact with the corresponding sides of the wheel.

At the same time, the elastic element **13** will be brought in traction so as to act constantly on the supports **2, 3** with a stress that tends to bring them back towards the first operating position.

Of course, the preload elastic force of the spring **13** will be less than the weight of the wheel so that it will not be possible for the supports **2, 3** return to the first position when the wheel is housed therebetween.

To remove the wheel, it will be sufficient to lift it from the first transverse arms **10, 11** as soon as it is raised thereby, even if not extracted from the seat **4,** it will no longer act on the supports **2, 3** that may return to the first operating position under the action of the elastic return means **13,** moving away the upper edges **5, 6** from the wheel which can be easily extracted.

From the above it appears evident that the stand reaches the intended objects.

The stand according to the invention is susceptible of numerous modifications and variations, all falling within the inventive concept expressed in accompanying claims. All the details may furthermore be replaced with other technically equivalent elements, and the materials may be different according to requirements, without departing from the scope of protection of the present invention.

## Claims

1. A stand for supporting bicycles or similar vehicles, comprising:
- a pair of substantially vertical lateral supports **(2, 3)** mutually facing and transversely offset to laterally delimit a seat **(4)** for housing a wheel of a bicycle or similar vehicle:
- means (7) for the mutual connection of said lateral supports **(2, 3)** in a moved away first operating position adapted to allow the insertion of the wheel in said seat **(4);**
**characterized in that** said connection means (7) are adapted to allow the automatic transverse movement of said supports **(2, 3)** upon insertion of the wheel in said seat **(4)** due to the thrust exerted by the wheel on said supports **(2, 3)** to bring the same from said first operative position to a second position narrower than said first position.

2. Stand as claimed in claim 1, **characterized in that** said supports **(2, 3)** comprise respective upper edges **(5, 6)** transversely offset from each other with adjustable transverse distance to allow insertion of the wheel in said seat **(4)** and respective lower edges **(8, 9)** mutually bound by said connection means **(7).**

3. Stand as claimed in claim 2, **characterized in that** said connection means (7) comprise at least one pair of first transverse arms **(10, 11)** which extend from respective lower edges **(8, 9)** of said lateral supports **(2, 3)** and which are hinged to each other to define an axis of mutual rotation **(R)** of said supports **(2, 3)** substantially parallel thereto for their rotation between said first operating position wherein said upper edges **(5, 6)** are at a maximum transverse distance and said second operating position in which said upper edges (**5, 6)** are at a minimum transverse distance.

4. Stand as claimed in claim 3, **characterized in that** said connection means **(7)** comprise, for each of said supports **(2)** two first transverse arms (**10**) each of which is pivoted on a respective first arm (**11**) of the other of said supports (3) to rotate about said axis of rotation **(R).**

5. Stand as claimed in claim 4, **characterized in that** the mutually pivoted first arms **(10, 11**) of each pair are mutually crossed to define a bearing **(12)** for the wheel in said housing **(4).**

6. Stand as claimed in claim 5, **characterized in that** said connection means **(7)** comprise elastic return means **(13)** adapted to return automatically said supports **(2,** 3) from said second position to said first position.

7. Stand as claimed in claim 6, **characterized in that** said elastic return means **(13)** comprise at least one preloaded elastic element having opposite ends associated with respective lateral supports **(2, 3).**

8. Stand as claimed in claim 7, **characterized in that** said elastic element **(13)** is a coil spring having opposite end coils fastened to corresponding mutually pivoted first arms **(10,11)** of one of said pairs to promote the mutual rotation thereof.

9. Stand as claimed in claim 8, **characterized in that** said supports **(2, 3)** comprise pairs of second transverse arms (**14, 5**) which extend from the respective lower edge **(8, 9)** in the opposite direction to the respective first arms **(10, 11)** for lying on the floor or support surface.

10. Stand as claimed in any preceding claim, **characterized in that** said supports **(2, 3)** are formed by tubular elements or wire elements in metal or plastic material.
